# EUROPEAN PATENT APPLICATION

(11) **EP 1 359 736 A1**
(43) Date of publication of application: **05.11.2003**
(21) Application number: 02394052.1
(22) Date of filing: 01.05.2002
(51) Int. Cl.: H04M 15/00, H04M 17/00

(54) **Protection for pre-paid mobile terminals**

(71) Applicant: Markport Limited, Dublin 1 (IE)
(72) Inventor: Corrigan, Louis, Enfield, County Meath (IE); McGee, Brendan, Mount Merrion, County Dublin (IE)
(74) Representative: Weldon, Michael James

(57) **Abstract**

In a mobile network control system (20), an IMEI (mobile terminal identifier) administration database (24) is linked to a subscriber database (23) and to a pre-paid platform (25). Subscriber data is captured at registration for both pre-paid and post paid subscribers. Thus, the system can provide customer care services to pre-paid subscribers, which was not previously possible as they were anonymous.

## Description

The invention relates to pre-paid mobile telephony.

Mobile network subscribers fall into two categories, namely pre-paid and post-paid subscribers for billing and customer service reasons. The traditional subscription model offered by mobile operators is the post-paid model, in which a contract is established between the mobile operator and the subscriber. Mobile network utilisation charges are accumulated by a subscriber during a billing interval, typically one month, and at the end of the billing interval, the mobile operator presents a bill for the accumulated charges to the subscriber. The subscriber makes the appropriate payment to the mobile operator making partial or full payment against the accumulated charges. In this post-paid model, the mobile operator effectively extends a credit period to the subscriber corresponding to the billing interval for usage of mobile network services. There is a risk of default by the subscriber so the mobile operator typically performs a credit risk analysis on the subscriber before accepting the subscription - and during this process gathers proof of identity of the subscriber, address information, etc. Once a subscription is accepted, there exists a billing relationship between the operator and the subscriber - in effect, the subscriber is known to the mobile operator.

More recently, the pre-paid subscription has become increasingly popular. In this model, the mobile operator receives payment for mobile network usage *before* the subscriber incurs charges. The pre-paid mobile subscriber effectively deposits a certain credit amount with the operator (in a pre-paid account) and as the subscriber uses network resources (e.g. by making phone calls), the mobile operator deducts the charges from the subscriber's pre-paid account. When the credit in the pre―paid account is exhausted, the pre-paid subscriber's access to the network is interrupted until the pre-paid subscriber deposits more credit into the pre-paid account (a recharge operation). As no credit check is required in this case, the mobile operator typically does not obtain subscriber identity or address information when a pre-paid subscription is activated. As a result, there is often no stored data concerning pre-paid subscribers set-up on a network, and purchase of recharge credit is often done anonymously. This makes it very difficult for the operator to communicate with the subscribers to enhance customer service and is often unsatisfactory for the subscribers concerned for this reason.

An example of such service differentiation between post-paid and pre-paid subscribers concerns the level of service offered by the operator when a mobile terminal is lost or stolen.

When a post-paid subscriber loses a mobile terminal and reports this to their operator, the operator can establish whether the report is genuine as they have subscriber identity information, which can be used to verify the source of the report. Once the report has been verified, the operator is able to deactivate the subscriber record associated with the Subscriber Identity Module (SIM) inserted in the mobile terminal, and thereby protect the subscriber from liability for any further charges that may be incurred by that SIM. In addition, if the operator knows the International Mobile Equipment Identifier (IMEI) associated with the mobile terminal, they can place the IMEI on a Black list maintained by an Equipment Identity Register (EIR), providing the opportunity to cancel service to the mobile terminal itself, irrespective of the SIM that may be inserted in it.

When a pre-paid subscriber loses a mobile terminal, it is difficult to verify that the report is genuine as the mobile operator does not typically have subscriber identity information with which to verify the source of the report. As a result, a pre-paid subscriber cannot receive the same level of protection against use of a stolen mobile terminal as the post-paid subscriber. This situation is further aggravated for the pre-paid subscriber as the pre-paid account is associated with the SIM in the mobile terminal. As the loss of the mobile terminal cannot be verified, the pre-paid subscriber suffers the financial loss of whatever credit amount remains in the pre-paid account when the mobile terminal is stolen.

From the mobile operator's perspective, the lack of a relationship with the pre-paid subscriber, whose identity is often unknown to the operator, creates little incentive for a pre-paid subscriber to remain loyal to the operator's network. In the event of loss or theft of a mobile terminal, a pre-paid subscriber is as likely to purchase a new pre-paid service from an operator's competitors as stay with their current operator.

The invention is therefore directed towards providing a method and system to address these problems.

### Statements of Invention

According to the invention, there is provided a mobile network control system comprising a subscriber database and a mobile terminal database, wherein said databases link a pre-paid subscriber identifier with a mobile terminal identifier.

In one embodiment, the system further comprises a customer care system comprising means for using pre-paid subscriber data of the subscriber database to provide customer care services to pre-paid subscribers.

In another embodiment, the system comprises an administration platform comprising means for storing mobile terminal identifiers, said platform being linked to the subscriber database and to a pre-paid platform.

In a further embodiment, said pre-paid platform comprises means for controlling usage of a mobile terminal associated with a pre-paid subscriber according to subscriber data.

In one embodiment, the pre-paid platform comprises means for freezing a pre-paid subscriber's account upon a change of status of a mobile terminal.

In another embodiment, the pre-paid platform comprises means for determining mobile terminal status from an equipment identity register.

In a further embodiment, the system comprises means for transforming an outstanding balance of a pre-paid account to a different pre-paid account.

In one embodiment, the system comprises means for controlling an insurance policy for a pre-paid subscriber.

In another embodiment, the system comprises means for generating said policy using subscriber data entered at registration of a pre-paid subscriber.

### Detailed Description of the Invention

The invention will be more clearly understood from the following description of some embodiments thereof, given by way of example only with reference to the accompanying drawings in which -
Figure 1 is a schematic diagram illustrating interactions between a customer care system, a subscriber database, a pre-paid system and certain elements in a GSM operator's network (PLMN);
Figure 2 is a diagram illustrating the context in which an Equipment Identity Register performs status checks on mobile terminals in use in the PLMN; and
Figure 3 is a diagram illustrating an operational system of the invention for a GSM network.

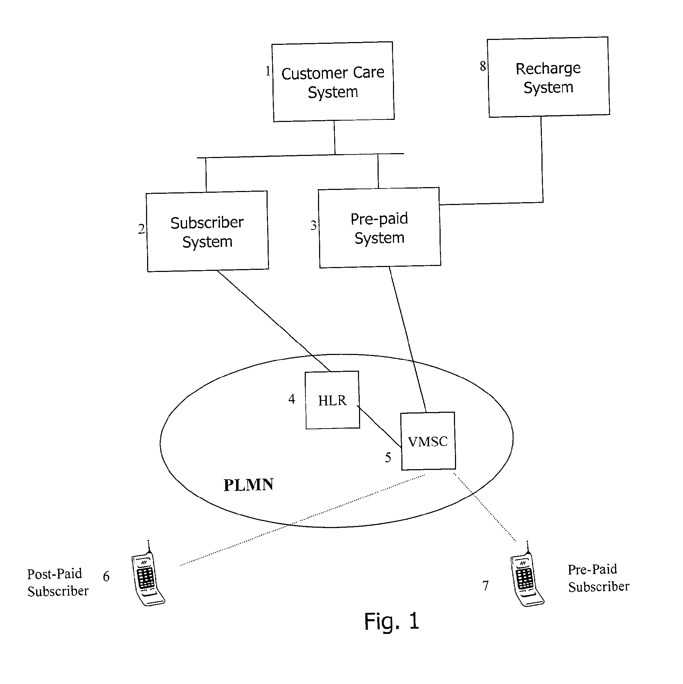

This invention provides a mechanism that combines capabilities of the Equipment Identity Register in a GSM network with functions of a GSM operator's customer care system to create an enhanced level of service for pre-paid subscribers in the event of loss or theft of a mobile terminal. With reference to Figure 1, typical operation of a GSM operator's customer care system in relation to post-paid and pre-paid subscribers can be described as follows.

The customer care system (1) is a central function used to manage the activation of subscribers, service access rights and, ultimately, the de-activation of services. For a post-paid subscriber, once subscriber identification details have been received they are stored in the subscriber database (2). The Home Location Register (HLR) (4) is a network element that stores all network details for the subscriber in a HLR subscriber record used within the PLMN. This record contains information regarding whether the subscriber is activated in the network and access rights to individual services offered by the network. An International Mobile Subscriber Identifier (IMSI) is allocated to the subscriber and is programmed into a Subscriber Identity Module (SIM) inserted in the subscriber's mobile terminal. This IMSI may be used to link the record in the subscriber database with the HLR subscriber record. When the customer care agent activates a subscription or otherwise modifies a subscription, there is usually an automated link to the HLR to make the appropriate updates in the HLR subscriber record.

For pre-paid service, the customer care system usually activates a block of IMSI's generating the appropriate HLR subscriber records and activations. When a pre-paid phone is purchased by a subscriber the SIM is already installed in the mobile terminal, and the HLR already has an activated record for that IMSI. A pre-paid account is created on the Pre-Paid System (3) also. However, no subscriber identification information can be inserted into the subscriber database at this point as the pre-paid mobile terminal may have been purchased over-the-counter in a retail outlet with no opportunity to gather subscriber data.

For access to network services, the network performs a check on the current status of the mobile subscriber by querying the HLR when the mobile terminal attempts to connect to the network. To deny service to any subscriber, post-paid or pre-paid, the mobile operator can deactivate service information in the subscriber's HLR record.

In the case of a pre-paid subscriber, even though the service information in the HLR record may be activated, an additional check must be made by the network to query the balance in the subscriber's pre-paid account before a service can be invoked, e.g. connection of a voice call, or transmission of an SMS. When the credit balance in the pre-paid account falls below the minimum threshold for service invocation, further service is denied to the pre-paid subscriber except for credit recharge operations. In a typical GSM network, the basic operational systems used to provide pre-paid services are not capable of providing enhanced management features for pre-paid subscribers such as:
- The ability to connect detailed subscriber identity information (similar to that obtained for post-paid subscribers) with the pre-paid credit balance.
- The ability to restrict access to or freeze the credit balance for a pre-paid subscriber.
- The ability to transfer the credit balance associated with a pre-paid subscription to a new pre-paid account associated with another IMSI identifier.
- The ability to connect handset identification information (IMEI) with the pre-paid credit balance.

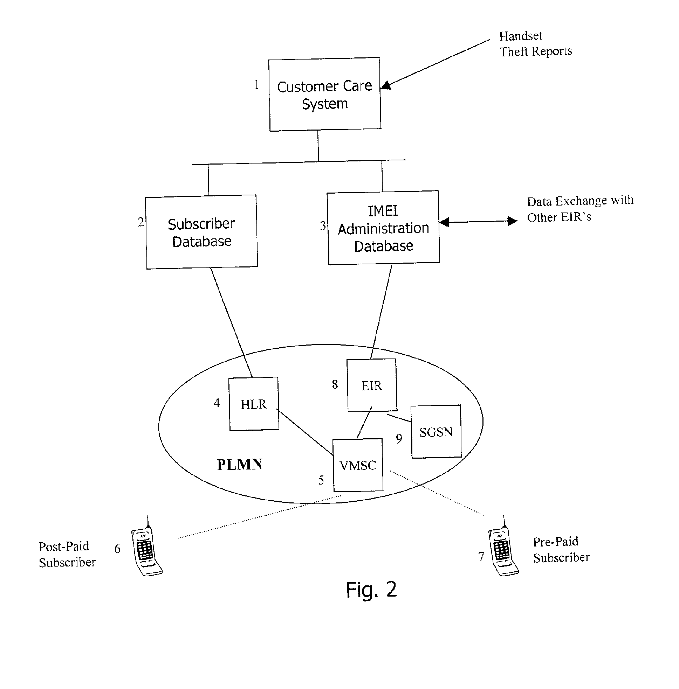

The Equipment Identity Register (EIR) provides a means by which a mobile operator can deny service to a subscriber, this time based on the status of the mobile terminal being used by the subscriber. With reference to Figure 2, typical operation of an EIR in a mobile network can be described as follows.

The EIR (8) is a network element that stores information relating to the status of mobile terminals. Each mobile terminal is identified by a unique International Mobile Equipment Identifier (IMEI) and the EIR provides storage for IMEI's in one of three lists:
- White List: used to store IMEI's for mobile terminals that have been approved for connection to GSM networks.
- Black List: used to store IMEI's for mobile terminals that should not be allowed to connect to a GSM network - for example unapproved equipment or equipment that has been stolen.
- Grey List: an operator may define their own criteria for placing an IMEI on the Grey list. This may be used by an operator to monitor usage of certain types of mobile terminals in their network for example.

Network elements in the PLMN used to deliver service to a mobile subscriber, such as a VLR/MSC (VMSC) (5) or a Serving GPRS Support Node (SGSN) (9), may obtain the IMEI information from a mobile terminal using network protocols and may be configured to submit a "Check_IMEI" operation to the EIR before invoking the requested network service. The EIR responds with status information on the IMEI which may be one of 'Black', 'White', 'Grey' or 'Unknown', depending on whether the IMEI was found on one of the internal lists of the EIR. If a status of 'Black' is returned to the VMSC or SGSN, it may deny service to the mobile terminal if required by the operator.

IMEI information may be placed on EIR lists in a number of ways. The operator's customer care system (1) may allow subscribers to report loss or theft of their handsets. After some verification of the validity of the report., the customer care system may add the IMEI to the operator's local Black list via an IMEI administration Database (3). The IMEI administration system is also responsible for exchanging IMEI lists with other mobile operators (usually via a Centralised EIR (CEIR) maintained by the GSM Association).. The IMEI administration database is responsible for ensuring that the IMEI lists in individual EIR nodes in the PLMN are synchronised with the master lists maintained in the administration system.

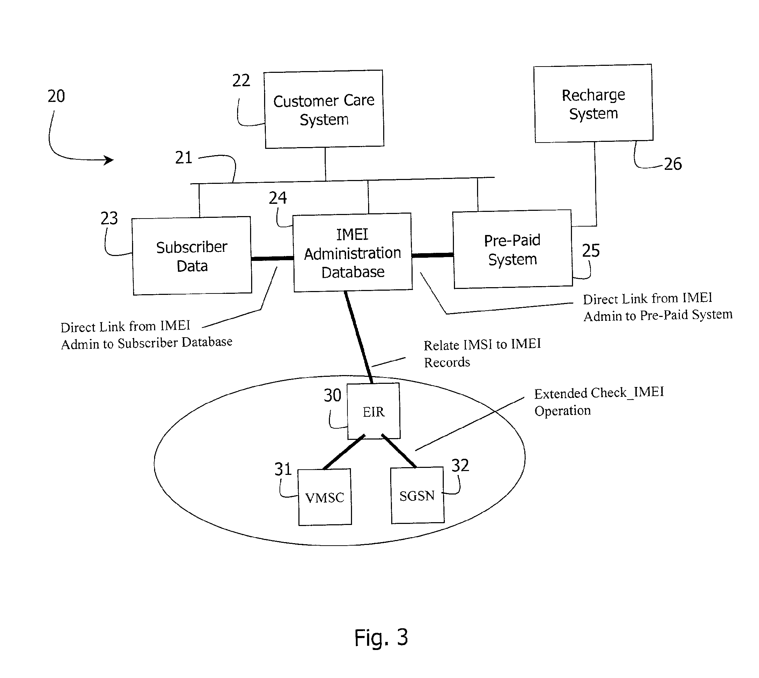

In this embodiment of the invention, a number of enhancements to the basic operational systems described above are provided to allow enhanced levels of customer support to be offered to Pre-Paid subscribers, equivalent to that typically enjoyed by post-paid subscribers, and also to provide additional services related to protection against misuse of mobile terminals (either pre-paid or post-paid) in the event of loss or theft of a mobile terminal. These enhancements are illustrated in Figure 3.

Referring to Fig. 3, a system 20 comprises a LAN 21 to which is connected a customer care system 22, a subscriber database 23, an IMEI administrator database 24, a pre-paid system 25, and a recharge system 26. The database 24 is linked to an EIR 30, in turn linked to a VMSC 31 and an SGSN 32. The following are aspects of operation of the system 20.

### Relate IMSI to IMEI Records:

With this enhancement, the IMEI administration system used by the operator extends internal IMEI records to so as to relate one or more IMSI's to the IMEI record, e.g. in an additional information field. This allows an association to be created between a specific mobile terminal and one or more individual subscribers. This association may be used to reflect registered ownership of the mobile terminal or, perhaps, a registered authorisation to use the mobile terminal for mobile network services.

### Direct Link from IMEI Administration System to Pre-Paid System:

With this enhancement, an association is created between a specific mobile terminal and an individual pre-paid subscriber's account as managed by the Pre-Paid system. This creates a two-way link that can trigger automatic actions in one system based on events that may occur in the other. For example, this association may be used to automatically disable access to the credit balance in the pre-paid subscriber's account if the handset registered for use with that account has been reported lost or stolen. Alternatively, if the pre-paid account is frozen, this may lead to automatic change of status of the mobile terminal associated with the account, e.g. it may be placed automatically on the Black list.

### Direct Link from IMEI Administration System to Subscriber Database:

With this enhancement, an association is created between a specific mobile terminal and an individual post-paid subscriber's record as managed by the subscriber database system. For example, this association may be used to automatically disable service to a handset that has been registered for use by the subscriber if the subscriber record is deactivated by the mobile operator.

### Extended Check_IMEI Operation

The standard Check_IMEI operation defined by the GSM MAP protocol contains only the IMEI of the mobile terminal whose status is being checked. This operation may be enhanced by including extra information fields in the Check_IMEI request, for example, the IMSI of the subscriber currently using the mobile terminal, or a unique Identifier associated with the current cell to which the mobile terminal is currently connected. With these enhancements, the EIR may perform additional checks before returning the status of the mobile terminal. For example, the EIR may be used to enforce a restriction of usage of a specific mobile terminal to one or more registered users for that terminal. With cell identifier information, the EIR may be used to produce location information regarding current usage attempts of a restricted mobile terminal.

### Transfer of Credit between Pre-Paid Accounts

Once a pre-paid subscriber's identity can be reliably established and validated, it is possible to allow enhanced access to the credit balance in the pre-paid account. For example, if a handset is lost or stolen, the mobile operator may open up a new pre-paid account for the subscriber and transfer the credit balance from the old account to the new one. It also creates the possibility of allowing the transfer of credit between different pre-paid subscribers.

### Examples of Enhanced Services:

### Protection of Pre-Paid Credit on Loss of Pre-Paid Mobile Terminal

The mobile operator can offer various protection schemes to pre-paid subscribers to ensure they do not lose stored pre-paid credit when they lose a mobile terminal. The principal impediment to launching this type of service up to now has been the difficulty for the operator to establish the identity of pre-paid mobile subscribers. In general, when a pre-paid service is purchased over the counter, the pre-paid subscriber does not have a strong incentive to follow up the purchase with a separate subscriber registration process. By offering to protect the unused credit on a pre-paid account in the event of loss or theft of a mobile terminal, the operator provides a strong incentive for pre-paid subscribers to register with the operator. The operational enhancements embodied in this invention ensure that the operator can offer this service without incurring significant financial risk. A sample implementation of the service is illustrated below.

A mobile operator offers a special insurance scheme to pre-paid subscribers, in which the pre-paid subscriber is guaranteed protection for any unused credit balance remaining in their account subsequent to a validated report of loss or theft of their mobile terminal. The service can be enhanced with an additional offer of insurance for a free replacement handset. In order to qualify for this service, the pre-paid subscriber must register their identity with the mobile operator and provide the IMEI of the pre-paid mobile terminal acquired over the counter. The IMEI is usually included in the documentation or packaging of a mobile terminal, and may also be obtained when the user keys in a command on the mobile terminal itself. The registration information must provide some proof of identity of the subscriber along with address information for contacting the subscriber (similar to information obtained from post-paid subscribers).

Once the registration information has been obtained, the customer care system can add the subscriber information to the subscriber database. The IMEI information and associated IMSI information may be added to the IMEI administration database and an automatic link to the subscriber's pre-paid account in the pre-paid system is created.

If the pre-paid subscriber loses their mobile terminal they are required to contact the mobile operator's customer services department to report the loss. Proof of identity may be matched against subscriber details stored in the subscriber database, while validation of the loss/theft may be provided by provision of a police report or similar. Once the loss/theft of the mobile terminal is validated, the customer care agent can change the status of the mobile terminal to 'Black' in the IMEI administration system. This changed status is automatically propagated to the EIR's in the PLMN. The associated pre-paid account in the pre-paid system can be automatically marked as inaccessible via the direct link, thus ensuring no loss of credit can occur once the loss of the mobile terminal has been reported. If an unauthorised user attempts to use the lost/stolen terminal, the EIR can automatically block service to the handset based on the IMEI check operation. If the subscriber's SIM card is moved to another mobile terminal, the pre-paid system will automatically block access to the subscriber's pre-paid account, thus denying service.

The mobile operator may now create a new pre-paid account for the subscriber, issue a new SIM and transfer the unused credit balance to the new account. If mobile terminal replacement insurance has been taken out by the subscriber, a replacement handset can also be issued by the operator.

Note that the direct link between the IMEI administration system and the Pre-Paid system can also work in the opposite direction. For example, if a pre-paid account is deactivated by the operator for any reason, the IMEI associated with that account could be automatically disabled in the IMEI administration system, thus denying service to the mobile terminal itself.

### Benefits for the pre-paid subscriber:

The pre-paid subscriber benefits by obtaining protection against loss of a mobile terminal, and more importantly, loss of the unused credit balance remaining in their pre-paid account.

### Benefits for the mobile operator:

The mobile operator benefits by being able to offer enhanced levels of service to pre-paid subscribers, equivalent to that offered to post-paid subscribers. This can provide a competitive advantage against other operators in their market. An additional benefit is that they establish a relationship with their pre-paid subscribers similar to that established via the billing relationship with post-paid subscribers. The subscriber identification and address information can be used as a rich source of information for profiling their pre-paid subscriber base and directing targeted marketing initiatives to that subscriber base.

### Restricted Usage of Mobile Terminal

The mobile operator can offer a service to subscribers (either post-paid or pre-paid) to limit usage of the mobile terminal to a registered subscriber or set of subscribers. This service may be attractive to operators who often have to provide subsidies for mobile terminals to attract new subscribers (especially the case for pre-paid subscribers). This service would provide some protection against loss or misuse of subsidised mobile terminals. The operational enhancements embodied in this invention provide the means to offer this service without incurring significant financial risk. A sample implementation of the service is illustrated below.

A mobile operator launches a service that allows a subscriber to register one or more subscribers for service on their mobile terminal. The operator may offer special savings or other financial incentives to encourage subscribers who have obtained subsidised terminals to avail of this service, e.g. free credits for pre-paid subscribers, or special discounts for post-paid subscribers. If a pre-paid subscriber registers for the service, they can be requested to provide the same levels of subscriber identification and address information as previously described. For a post-paid subscriber, this information will already be available.

Once a subscriber has successfully registered for the service, the IMSI's (one or more) they wish to associate with their mobile terminal can be added by the customer service agent to the IMEI administration database. This information is then forwarded to the EIR database in the PLMN. The IMEI record is marked as a "Restricted Usage" terminal. An enhanced Check_IMEI operation is implemented in the EIR so that when a check is requested by the VMSC or SGSN against a restricted usage IMEI, the EIR verifies that the IMSI data provided in the Check_IMEI parameters matches one of the registered users of the terminal. If a match is found, then the status of the IMEI is returned according to the list on which it is stored. If a match is not found, the enhanced EIR could return a 'Black' status for the IMEI, indicating that service should be denied to the mobile terminal.

### Benefits for the subscriber:

The subscriber benefits by obtaining special discounts (or credits for pre-paid subscribers) by registering specific users against their mobile terminal. This prevents unauthorised substitution of SIM's in the mobile terminal even before the owner has discovered the loss/theft of the terminal. By registering a mobile terminal for restricted usage, the subscriber may be eligible to use the mobile terminal tracking service to help recover the device (see below).

### Benefits for the mobile operator:

The mobile operator benefits by being able to limit onward distribution of subsidised terminals by pre-paid subscribers. Through co-operation between operators in a national market, it would be possible to exchange details on restricted usage terminals between operators - thus ensuring that subsidised terminals could not "leak" from one network to another within a national market. An alternative use of this service by the mobile operator could be to automatically block service to a restricted usage IMEI if the subscriber record associated with the IMEI is deactivated for any reason. Again, this prevents a subscriber from distributing onwards a subsidised phone after their own account (pre-paid or post-paid) has been deactivated.

### Tracking of Lost/Stolen Mobile Terminals

The enhanced Check_IMEI operation can be used by a mobile operator to track the attempted usage of lost/stolen mobile terminals within their network. For example, after a mobile terminal has been reported as lost/stolen, the IMEI record for the terminal can be modified to set a "Track User" flag on the record. If an attempt to use the mobile terminal is detected by the EIR, the IMSI associated with the attempted usage and the location of the cell in which the terminal was located can be recorded. The subscriber and location information may be useful in recovering the mobile terminal - e.g. the new user of the terminal may not be aware that the terminal was reported lost/stolen.

The invention provides a means for protecting the pre-paid credit associated with a pre-paid mobile terminal in GSM networks and providing a credit and mobile terminal protection service to the GSM pre-paid subscriber community. It also provides a facility to acquire and record subscriber identity information for pre-paid subscribers, allowing mobile operators to target special offers and incentives to their pre-paid subscriber base as well as the post-paid subscriber base that is normally covered.

It will be appreciated that the invention provides for provision of greatly enhanced customer services to subscribers and improved network control by the operator on the basis of the enhanced data.

The invention is not limited to the embodiments described but may be varied in construction and detail.

## Claims

1. A mobile network control system comprising a subscriber database and a mobile terminal database, wherein said databases link a pre-paid subscriber identifier with a mobile terminal identifier.

2. A mobile network control system as claimed in claim 1, wherein the system further comprises a customer care system comprising means for using pre-paid subscriber data of the subscriber database to provide customer care services to pre-paid subscribers.

3. A mobile network control system as claimed in claim 1 or 2, wherein the system comprises an administration platform comprising means for storing mobile terminal identifiers, said platform being linked to the subscriber database and to a pre-paid platform.

4. A mobile network control system as claimed in claim 3, wherein said pre-paid platform comprises means for controlling usage of a mobile terminal associated with a pre-paid subscriber according to subscriber data.

5. A mobile network control system as claimed in claim 4, wherein the pre-paid platform comprises means for freezing a pre-paid subscriber's account upon a change of status of a mobile terminal.

6. A mobile network control system as claimed in claim 5, wherein the pre-paid platform comprises means for determining mobile terminal status from an equipment identity register.

7. A mobile network control system as claimed in any preceding claim, wherein the system comprises means for transforming an outstanding balance of a pre-paid account to a different pre-paid account.

8. A mobile network control system as claimed in any preceding claim, wherein the system comprises means for controlling an insurance policy for a pre-paid subscriber.

9. A mobile network control system as claimed in claim 8, wherein the system comprises means for generating said policy using subscriber data entered at registration of a pre-paid subscriber.
